# EUROPEAN PATENT APPLICATION

(11) **EP 4 478 831 A1**
(43) Date of publication of application: **18.12.2024**
(21) Application number: 22925338.0
(22) Date of filing: 10.02.2022
(51) Int. Cl.: H04W 76/40

(54) **IAB DONOR DEVICE AND TRANSFER MIGRATION MANAGEMENT METHOD**

(71) Applicant: FUJITSU LIMITED, Kawasaki-shi, Kanagawa 211-8588 (JP)
(72) Inventor: LU, Yang, Beijing 100022 (CN)
(74) Representative: Haseltine Lake Kempner LLP
(86) International application number: PCT/CN2022/075888
(87) International publication number: WO 2023/150976

(57) **Abstract**

Embodiments of the present disclosure provide an IAB-donor device and a transport migration management method. An IAB-DU of an IAB-node maintains F1 connection with a first donor-CU, and a resource serving for a traffic of the IAB-node has been established in a topology of a second donor-CU, and the method includes: the first donor-CU transmits a first transport migration release request for the traffic to the second donor-CU; wherein the first transport migration release request is used to request for releasing a resource serving for the traffic in the topology of the second donor-CU.

## Description

### TECHNICAL FIELD

The embodiments of the present disclosure relate to the communication field.

### BACKGROUND

Future seamless cellular network deployment requires very flexible and ultra-dense new radio (NR) cell deployment, an ultra-dense network is one of goals of 5G, and deploying NR network that does not require wired backhaul is very important to realize the ultra-dense network of 5G. Because a 5G millimeter wave reduces a coverage of a cell, a wireless self-backhaul system needs multi-hops to meet deployment requirements. 5G's high bandwidth, massive Multiple Input Multiple Output (MIMO) and beam system enables it easier to develop a wireless self-backhaul system of an ultra-dense NR cell with 5G than with LTE. In order to develop such multi-hop system with wireless self-backhaul, 3GPP starts research and standardization of an Integrated Access and Backhaul (IAB) project at Rel-16.

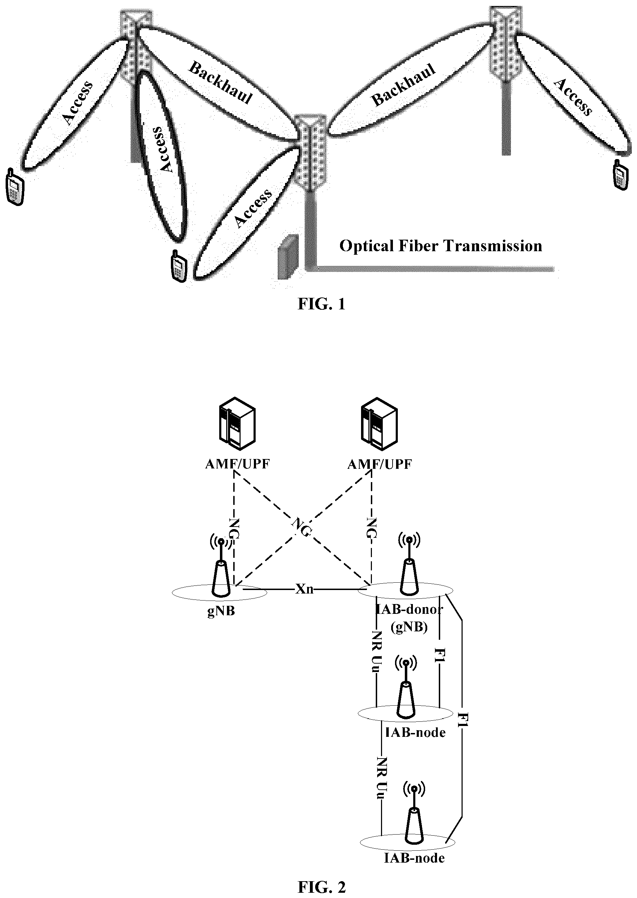

FIG. 1 is a schematic diagram of an IAB system. As shown in FIG. 1, in the IAB system, Uu air interface radio transmission of NR is used for access and backhaul, a relay node simultaneously supports both access and backhaul functions. The relay node multiplexes an access link and a backhaul link in a time domain, a frequency domain or a space domain, and the access link and the backhaul link may use the same or different frequency bands.

In an IAB network architecture, the relay node refers to an IAB-node that simultaneously supports both access and backhaul functions. A last-hop access node at a network side is called IAB-donor that supports a gNB function and supports IAB-node access. All UE data may be backhauled to the IAB-donor via the IAB-node in one or more hops.

The function of the IAB-node is divided into two parts, one is a gNB-DU function, called IAB-DU (a distributed unit), and the other is a UE function, called IAB-MT (a mobile terminal). The IAB-DU realizes a function of a network side device, is connected to a downstream child IAB-node (child IAB node or called a child node for short), provides NR air interface access for a UE and the downstream child IAB-node, and establishes an F 1 connection with IAB donor-CU (a donor centralized unit). The IAB-MT realizes a partial function of a terminal equipment, is connected to an upstream parent IAB-node (parent IAB node or called a parent node for short) or IAB-donor DU. The IAB-MT includes functions of a physical layer, a layer 2, Radio Resource Control (RRC) and a Non-Access Stratum (NAS) layer, and is further connected to the IAB Donor-CU and a Core Network (CN) indirectly.

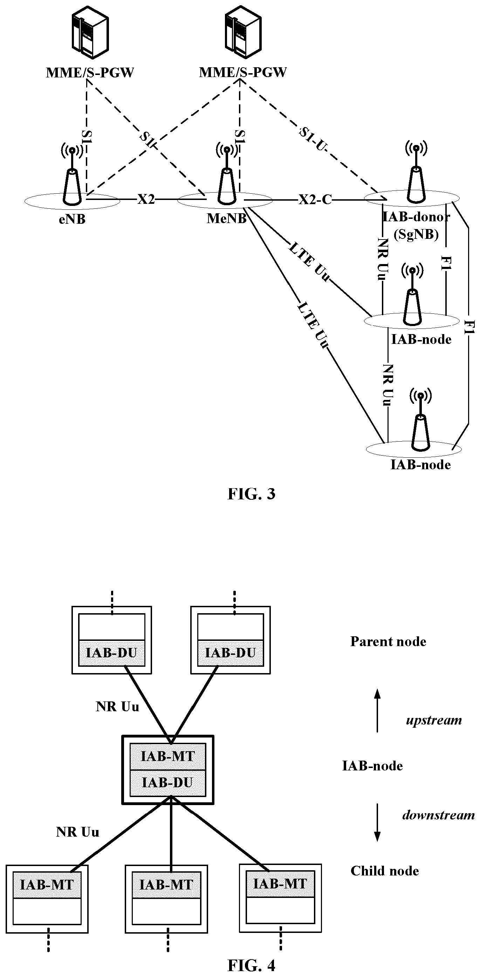

In the IAB system, the IAB-node may be accessed to a network by using a Standalone (SA) mode or an E-UTRA-NRDualConnectivity (EN-DC) mode. FIG. 2 is a schematic diagram of an IAB architecture in the SA mode. FIG. 3 is a schematic diagram of an IAB architecture in the EN-DC mode.

FIG. 4 is a schematic diagram of an IAB node, a parent node (parent IAB-node) and a child node (child IAB-node). As shown in FIG. 4, IAB-DU of the IAB node as a network side connects to IAB-MT of the child node, and the IAB-MT of the IAB node as a terminal side connects to the IAB-DU of the parent node.

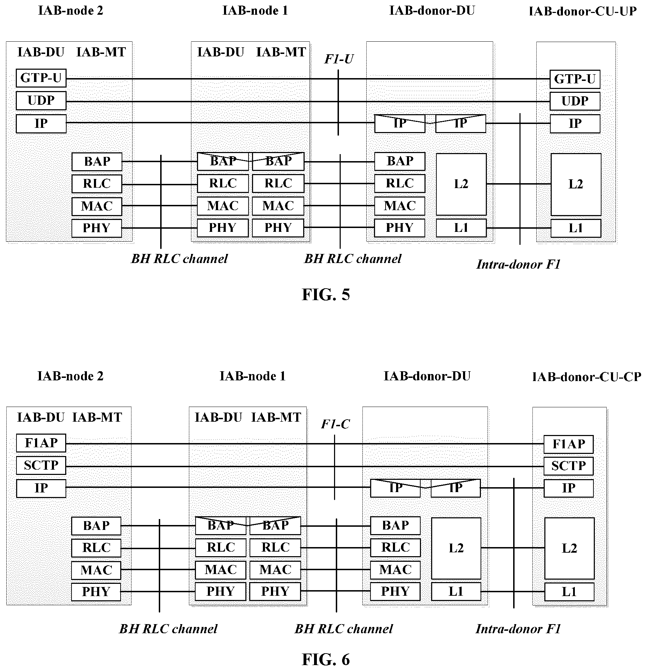

FIG. 5 is a schematic diagram of an F 1 user plane (F 1-U) protocol stack between the IAB-DU and the IAB-donor CU. FIG. 6 is a schematic diagram of an F1 control plane (F1-C) protocol stack between the IAB-DU and the IAB donor-CU. As shown in FIGS. 5 and 6, the F1-U and the F1-C are established on a transport (IP) layer between the IAB-DU and the IAB donor-CU, FIGS. 5 and 6 show two-hop wireless backhaul and one-hop wired backhaul.

On a backhaul link, the transport (IP) layer is carried on a backhaul adaptation protocol (BAP) sublayer, a BAP entity in the IAB-node implements a routing function in the IAB system, the IAB donor-CU provides a routing table. A BAP PDU (Protocol Data Unit) is transmitted in an RLC (Radio Link Control) channel of the backhaul link, multiple RLC channels of the backhaul link may be configured by the IAB-donor to carry traffics with different priorities and QoS (Quality of Service), the BAP PDU is mapped by the BAP entity to different backhaul RLC channels.

It should be noted that the above introduction to the technical background is just to facilitate a clear and complete description of the technical solutions of the present disclosure, and is elaborated to facilitate the understanding of persons skilled in the art, it cannot be considered that these technical solutions are known by persons skilled in the art just because these solutions are elaborated in the Background of the present disclosure.

### SUMMARY

The inventor finds that after traffics of a migrating node and its child node thereof are migrated from a network topology of a first donor-CU to a network topology of a second donor-CU, traffics that have been migrated to the second donor-CU may possibly need to be migrated back to the first donor-CU, for example when a network load of the second donor-CU is higher. Therefore, resources serving for a migrated traffic in a topology of the second donor-CU need to be released, and resources serving for this traffic in a topology domain of the first donor-CU need to be established. Moreover, when a traffic ends, resources serving for the migrated traffic in the topology of the second donor-CU also need to be released. However, for how to release a transport resource of a traffic, currently, there is no corresponding solution.

In order to solve at least one of the above problems, the embodiments of the present disclosure provide an IAB-donor device and a transport migration management method.

According to one aspect of the embodiments of the present disclosure, a transport migration management method is provided, wherein an IAB-DU of an IAB-node maintains F1 connection with a first donor centralized unit (donor-CU), and a resource serving for a traffic of the IAB-node has been established in a topology of a second donor-CU, and the method includes:
the first donor-CU transmits a first transport migration release request for the traffic to the second donor-CU, wherein the first transport migration release request is used to request for releasing a resource serving for the traffic in the topology of the second donor-CU.

According to another aspect of the embodiments of the present disclosure, a transport migration management method is provided, wherein an IAB-DU of an IAB-node maintains F1 connection with a first donor centralized unit (donor-CU), and a resource serving for a traffic of the IAB-node has been established in a topology of a second donor-CU, and the method includes:
the second donor-CU receives a first transport migration release request for the traffic transmitted by the first donor-CU; wherein the first transport migration release request is used to request for releasing a resource serving for the traffic in the topology of the second donor-CU.

According to another aspect of the embodiments of the present disclosure, a transport migration management method is provided, wherein an IAB-DU of an IAB-node maintains F1 connection with a first donor-CU, and a resource serving for a traffic of the IAB-node has been established in a topology of a second donor-CU, and the method includes:
the second donor-CU transmits a second transport migration release request for the traffic to the first donor-CU; and
the second donor-CU releases a resource serving for the traffic in the topology of the second donor-CU.

According to another aspect of the embodiments of the present disclosure, a transport migration management method is provided, wherein an IAB-DU of an IAB-node maintains F1 connection with a first donor-CU, and a resource serving for a traffic of the IAB-node has been established in a topology of a second donor-CU, and the method includes:
the first donor-CU receives a second transport migration release request for the traffic transmitted by the second donor-CU; wherein the second donor-CU releases a resource serving for the traffic in the topology of the second donor-CU.

According to another aspect of the embodiments of the present disclosure, an IAB-donor device is provided, wherein an IAB-DU of an IAB-node maintains F1 connection with a first donor centralized unit (donor-CU), and a resource serving for a traffic of the IAB-node has been established in a topology of a second donor-CU, and the device includes:
a transmitting portion configured to transmit a first transport migration release request for the traffic to the second donor-CU, wherein the first transport migration release request is used to request for releasing a resource serving for the traffic in the topology of the second donor-CU.

According to another aspect of the embodiments of the present disclosure, an IAB-donor device is provided, wherein an IAB-DU of an IAB-node maintains F1 connection with a first donor centralized unit (donor-CU), and a resource serving for a traffic of the IAB-node has been established in a topology of a second donor-CU, and the device includes:
a receiving portion configured to receive a first transport migration release request for the traffic transmitted by the first donor-CU, wherein the first transport migration release request is used to request for releasing a resource serving for the traffic in the topology of the second donor-CU.

According to another aspect of the embodiments of the present disclosure, an IAB-donor device is provided, wherein an IAB-DU of an IAB-node maintains F1 connection with a first donor-CU, and a resource serving for a traffic of the IAB-node has been established in a topology of a second donor-CU, and the device includes:
a transmitting portion configured to transmit a second transport migration release request for the traffic to the first donor-CU; and
a processing portion configured to release a resource serving for the traffic in the topology of the second donor-CU.

According to another aspect of the embodiments of the present disclosure, an IAB-donor device is provided, wherein an IAB-DU of an IAB-node maintains F1 connection with a first donor-CU, and a resource serving for a traffic of the IAB-node has been established in a topology of a second donor-CU, and the device includes:
a receiving portion configured to receive a second transport migration release request for the traffic transmitted by the second donor-CU; wherein the second donor-CU releases a resource serving for the traffic in the topology of the second donor-CU.

According to another aspect of the embodiments of the present disclosure, an IAB system is provided, including a first donor centralized unit and a second donor centralized unit;
the first donor centralized unit transmits a first transport migration release request for a traffic, wherein the first transport migration release request is used to request for releasing a resource serving for the traffic in a topology of the second donor-CU; the second donor centralized unit receives the first transport migration release request;
   or,
the second donor centralized unit transmits a second transport migration release request for the traffic, and releases the resource serving for the traffic in the topology of the second donor-CU; the first donor centralized unit receives the second transport migration release request.

One of advantageous effects of the embodiments of the present disclosure lies in: the first donor-CU transmits a first transport migration release request for a traffic to the second donor-CU, wherein the first transport migration release request is used to request for releasing a resource serving for the traffic in the topology of the second donor-CU. Thereby, the second donor-CU may release transport resources serving for the traffic, so that the traffic is migrated back to the topology of the first donor-CU or the transport of the traffic stops, so as to improve system efficiency and performance.

Referring to the later description and drawings, specific implementations of the present disclosure are disclosed in detail, indicating a manner that the principle of the present disclosure can be adopted. It should be understood that the implementations of the present disclosure are not limited in terms of the scope. Within the scope of the terms of the appended supplements, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/comprising/include/including" when being used herein refers to the presence of a feature, a whole piece, a step or a component, but does not exclude the presence or addition of one or more other features, whole pieces, steps or components.

### BRIEF DESCRIPTION OF DRAWINGS

An element and a feature described in a drawing or an implementation of the present embodiments of the present disclosure can be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art can also obtain other drawings based on the drawings under the premise that they do not pay inventive labor. In the drawings:
FIG. 1 is a schematic diagram of an IAB system;
FIG. 2 is a schematic diagram of an IAB architecture in a SA mode;
FIG. 3 is a schematic diagram of an IAB architecture in an EN-DC mode;
FIG. 4 is a schematic diagram of a parent node (parent IAB-node) and a child node (child IAB-node);
FIG. 5 is a schematic diagram of an F1-U protocol stack of the IAB system;
FIG. 6 is a schematic diagram of an F1-C protocol stack of the IAB system;
FIG. 7 is a schematic diagram of IAB system routing;
FIG. 8 is a schematic diagram of network topology adaptation;
FIG. 9 is a schematic diagram of transport migration in the embodiments of the present disclosure;
FIG. 10 is a schematic diagram of a transport migration management method in the embodiments of the present disclosure;
FIG. 11 is a signaling flow graph of transport migration release in the embodiments of the present disclosure;
FIG. 12 is another schematic diagram of a transport migration management method in the embodiments of the present disclosure;
FIG. 13 is another schematic diagram of a transport migration management method in the embodiments of the present disclosure;
FIG. 14 is another signaling flow graph of transport migration release in the embodiments of the present disclosure;
FIG. 15 is another schematic diagram of a transport migration management method in the embodiments of the present disclosure;
FIG. 16 is a schematic diagram of an IAB-donor device in the embodiments of the present disclosure;
FIG. 17 is another schematic diagram of an IAB-donor device in the embodiments of the present disclosure;
FIG. 18 is another schematic diagram of an IAB-donor device in the embodiments of the present disclosure;
FIG. 19 is another schematic diagram of an IAB-donor device in the embodiments of the present disclosure;
FIG. 20 is a schematic diagram of an IAB device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached supplements.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include/contain ", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on...... ", unless the context clearly indicates otherwise.

In the embodiments of the present disclosure, the term "a communication network" or "a wireless communication network" may refer to a network that meets any of the following communication standards, such as New Radio (NR), Long Term Evolution (LTE), LTE-Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, 6G and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "BS" may include their some or all functions, each BS may provide communication coverage to a specific geographic region. The term "a cell" may refer to a BS and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

A routing function of an IAB system is implemented by a BAP layer, each IAB-node stores a routing configuration (BH routing configuration) and an RLC channel mapping configuration (BH RLC Channel Mapping Configuration). A BAP entity performs routing according to the routing configuration, the RLC channel mapping configuration, and a routing identifier (Routing ID) in a BAP layer data packet header. The Routing ID contains a destination BAP address and a path identifier.

The routing configuration contains a mapping relationship between the Routing ID and a BAP address of a next-hop node. The RLC channel mapping configuration contains a mapping relationship among a BAP address of a prior-hop node, an ingress link RLC channel ID, a BAP address of a next-hop node and an egress link RLC channel ID.

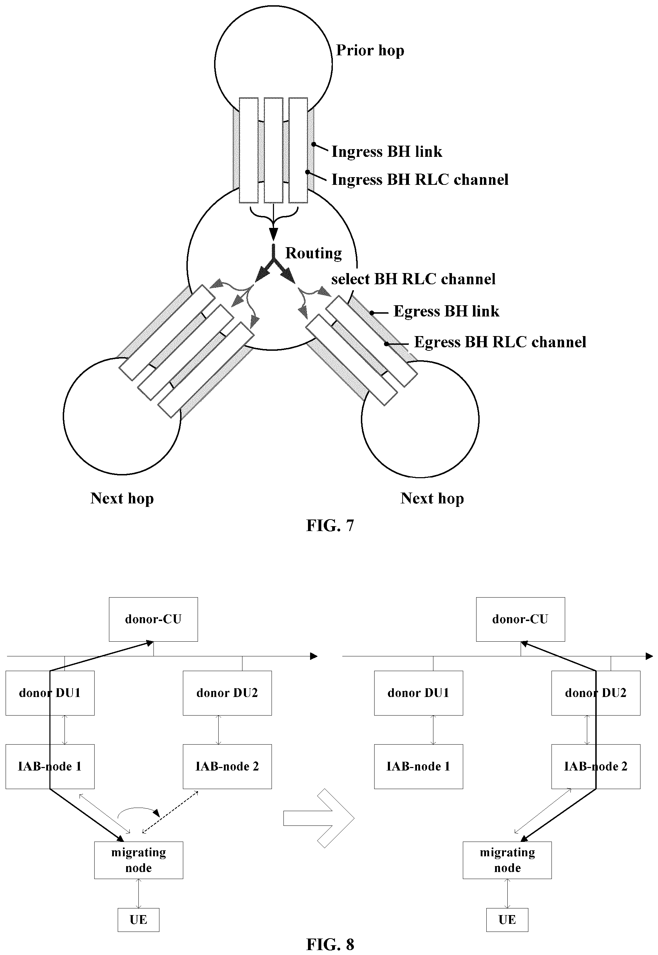

FIG. 7 is a schematic diagram of IAB system routing. As shown in FIG. 7, for each data packet, a BAP address of a next-hop node may be found from a routing configuration via a routing ID of a data packet header. A BAP address of a prior-hop node and an ingress link RLC channel ID are all known. In this way, after the BAP address of the next-hop node is determined, an egress link RLC channel ID may be found via an RLC channel mapping configuration according to the BAP address of the prior-hop node + the ingress link RLC channel ID + the BAP address of the next-hop node.

The IAB-donor DU stores a routing configuration (BH routing configuration) and a downlink RLC channel mapping configuration (Downlink Traffic to BH RLC Channel Mapping Configuration). The IAB-donor DU performs routing according to the routing configuration, the RLC channel mapping configuration, and Routing ID in a BAP layer data packet header. The routing configuration contains a mapping relationship between the Routing ID and an address of the next-hop node. The downlink RLC channel mapping configuration contains a mapping relationship among a target IP address, a Differentiated Service Code Point (DSCP), an address of a next-hop node and an egress link RLC channel ID.

For each downlink data packet that reaches the lAB-donor DU, the IAB-donor DU may find an address of a next-hop node from a routing configuration according to Routing ID in a data packet header. In this way, after the address of the next-hop node is determined, an egress link RLC channel ID is found from the downlink RLC channel mapping configuration according to an IP address of a data packet, and the DSCP.

An access IAB-node stores uplink backhaul information (BH information), including a routing ID used by a traffic, an uplink backhaul RLC channel ID, and an address of a next-hop node. The access IAB-node configures a routing ID in a BAP layer data packet header of an uplink traffic according to an uplink BH information and selects a BH RLC channel and a next-hop node for uplink traffic transport.

The above text schematically describes routing of an IAB system and BH RLC channel mapping, the following text describes updating of a network topology of the IAB system. Rel-16 NR has standardized a process of topology adaptation when an IAB-node moves under the same donor-CU.

FIG. 8 is a schematic diagram of intra-CU topology adaptation. When an IAB-node changes a parent node (changing from IAB-node 1 to IAB-node 2), the donor-CU configures a configuration related to path migration for the IAB-node via an RRC reconfiguration message, so that the IAB-node performs migration of an F1 transport path.

A configuration related to path migration includes updating a default BH RLC channel of uplink F1-C, F 1-U and non-F1 data, updating a default BAP routing ID, and updating an IP address routed to a donor-DU. When the IAB-node is accessed to a new parent node, the IAB-node starts to apply the configuration related to path migration. For a child node of the IAB-node, the configuration related to path migration is carried out also using the same method.

3GPP Rel-17 supports network topology updating and a backhaul (BH) Radio Link Failure (RLF) recovery procedure when an IAB-node moves under different donor-CUs, the IAB-node may be handed over or may re-establish from a parent node served by a source donor-CU (which may also be called an F1-terminating CU or a first donor-CU) to a parent node served by a target donor-CU (which may also be called a non-F1-terminating CU or a second donor-CU), all traffics of the IAB-node (and traffics of its child node) need to be migrated to a topology of the non-F1-terminating CU. Rel-17 further supports a topology redundancy procedure when the IAB-node establishes dual connection with the non-F1-terminating CU, and a transport path of some traffics of the IAB-node may be migrated to a topology of the non-F1-terminating CU.

After the IAB-node is handed over or performs RLF recovery from donor-CU 1 (F1-terminating CU) to donor-CU 2 (non-F1-terminating CU), or adds RRC connection with donor-CU 2, only the RRC of the IAB-MT is connected to donor-CU 2, the F1 interface still terminates at donor- CU 1, in this case, the IAB-Node may also be called a boundary node. RRC connection of its served child node and UE still belongs to donor-CU 1, the F1 interface of the child node also terminates at donor-CU 1. Therefore, a child node of the boundary node still belongs to the topology of donor-CU 1.

In order for an uplink traffic of the child node to be transmitted in a topology of donor-CU 2, the boundary node needs to replace the routing ID of the uplink traffic belonging to the topology of donor-CU 1 (the destination address is a donor-DU BAP address of donor-CU 1) with the routing ID belonging to the topology of donor-CU 2 (the destination address is a donor-DU BAP address of donor-CU 2). In order for a downlink traffic of the child node to be transmitted in a topology of donor-CU 2, the boundary node replaces the routing ID of the downlink traffic belonging to the topology of donor-CU 2 (the destination address is a donor-DU BAP address of donor-CU 2) with the routing ID belonging to the topology of donor-CU 1 (the destination address is a donor-DU BAP address of donor-CU 1). An uplink traffic of the boundary node itself needs to be updated to the routing ID belonging to the topology of donor-CU 2.

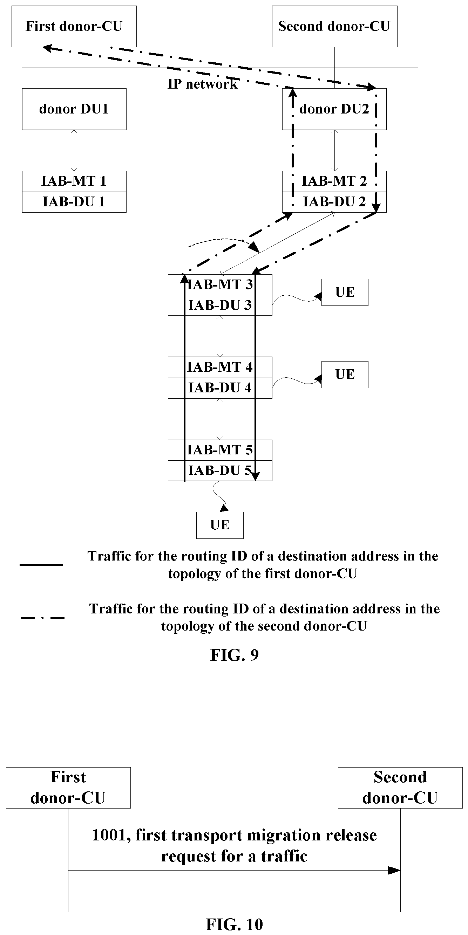

FIG. 9 is a schematic diagram of transport migration in the embodiments of the present disclosure. As shown in FIG. 9, an IAB-MT of IAB-node 3 is migrated from donor-CU 1 to donor-CU 2. If a traffic of a child node is migrated to the topology of donor-CU 2, a network device will configure a routing ID mapping relationship (such as BAP Header Rewriting information) between topologies to the boundary node.

When the boundary node forwards uplink data to a parent node in the topology of donor-CU2, after the routing ID belonging to donor-CU 1 is replaced with the routing ID belonging to donor-CU2, routing selection and BH RLC channel selection need to be performed according to the replaced routing ID, thus the network device will configure a routing table belonging to the topology of donor-CU 2 for the boundary node (before handover, only a routing table in the topology of donor-CU 1 is configured at the boundary node) and a BH RLC channel mapping table from the topology of donor-CU 1 to the topology of donor-CU 2.

Similarly, when forwarding downlink data, routing and BH RLC channel selection need to be performed according to the replaced routing ID, thus the network device will configure the boundary node with a downlink BH RLC channel mapping table from the topology of donor-CU 2 to the topology of donor-CU 1.

If a traffic of the boundary node is migrated to the topology of donor-CU 2, the network device needs to configure uplink backhaul information belonging to the topology of donor-CU 2 at the boundary node, including a routing ID, an uplink backhaul RLC channel ID, and an address of a next-hop node.

If transport of some or all of the traffics is migrated to the topology of donor-CU 2, resources serving for the traffics need to be established in the topology of donor-CU 2, for example, the backhaul BH RLC channel and/or BAP sublayer routing used on a path in the topology of donor-CU 1 are/is configured for the traffics.

In order to configure the boundary node with a routing table belonging to the topology of donor-CU 2 and a BH RLC channel mapping table between two donor-CU topologies and to establish a resource serving for a migrated traffic in the topology of donor-CU 2, donor-CU 1 transmits a transport migration establishment request to donor-CU 2.
donor-CU 1 transmits the following information to donor-CU 2 for each traffic flow that requests migration, and an IP address request (including a donor-DU BAP address in the topology domain of donor-CU 1, and an IP address anchored at this donor-DU):
   - a traffic identifier;
   - Quality of Service (QoS) information of a traffic or a traffic type;
   - for a traffic flow of a child node, a routing ID and a BH RLC channel (including an egress routing ID and an egress BH RLC channel of a downlink traffic, an ingress routing ID and an ingress BH RLC channel of an uplink traffic) in the topology of donor-CU 1 further need to be transmitted.
donor-CU 2 transmits the following information (for each traffic flow) and an IP address response (including a donor-DU BAP address in the topology domain of donor-CU 1, and an IP address anchored at a donor-DU of donor-CU 2) to donor-CU 1:
   - a traffic identifier;
   - a routing ID and a BH RLC channel (including an ingress routing ID and an ingress BH RLC channel of a downlink traffic, or, an egress routing ID and an egress BH RLC channel of an uplink traffic) of a traffic in the topology of donor-CU 2;
   - a prior-hop BAP address of a downlink traffic in the topology domain of donor-CU 2;
   - a next-hop BAP address of an uplink traffic in the topology domain of donor-CU 2;
   - QoS mapping information (such as DSCP or a flow label of IPv6) used by a downlink traffic.

In the embodiments of the present disclosure, the IAB-node device refers to a migrating node or its child node, unless otherwise specified. In addition, "a resource serving for a traffic of the IAB-node has been established in a topology of a donor-CU" may also be referred to as "a traffic of the IAB-node is migrated to a topology of a donor-CU", etc., the present disclosure is not limited to these expressions. The embodiments of the present disclosure are further described below.

### Embodiments of a first aspect

The embodiments of the present disclosure provide a transport migration management method, which is described from a first donor centralized unit (donor-CU) side. An IAB-DU of an IAB-node maintains F1 connection with a first donor centralized unit (donor-CU), and a resource serving for a traffic of the IAB-node has been established in a topology of a second donor-CU.

FIG. 10 is a schematic diagram of a transport migration management method in the embodiments of the present disclosure. As shown in FIG. 10, the method includes:
1001, the first donor-CU transmits a first transport migration release request for the traffic to the second donor-CU, wherein the first transport migration release request is used to request for releasing a resource serving for the traffic in the topology of the second donor-CU.

It should be noted that the above FIG. 10 is only schematic description of the embodiments of the present disclosure, but the present disclosure is not limited to this. For example, an execution step of each operation can be adjusted appropriately, moreover other some operations can be increased or reduced. Persons skilled in the art can make appropriate modifications according to the above contents, not limited to the records in the above FIG. 10.

In some embodiments, the IAB-MT of the IAB-node maintains an RRC connection with the second donor-CU; for example, an IAB-MT of a migrating node maintains an RRC connection with the second donor-CU. Or, the IAB-MT of the IAB-node maintains an RRC connection with the first donor-CU; for example, a child node of the migrating node maintains an RRC connection with the first donor-CU.

In some embodiments, the traffic includes at least one or a combination of the following: an F1 control plane (F1-C) traffic, an F1 user plane (F1-U) traffic, or a non-F1 traffic; the embodiments of the present disclosure are not limited to this.

In some embodiments, in a case where the traffic is migrated from the topology of the second donor-CU back to the topology of the first donor-CU, or when the traffic ends, the first donor-CU transmits a first transport migration release request for the traffic to the second donor-CU.

In some embodiments, the first donor-CU transmits a first transport migration release request via a first TRANSPORT MIGRATION MANAGEMENT REQUEST message. However, the present disclosure is not limited to this, other messages may also carry a transport migration release request.

Thereby, through the first transport migration release request, transport migration configuration of a traffic can be released, and a problem of data being discarded may be reduced or avoided, system efficiency and performance are improved.

A situation of migrating a traffic from the topology of the second donor-CU back to the topology of the first donor-CU is schematically described below.

In some embodiments, in a case where the traffic is migrated from the topology of the second donor-CU back to the topology of the first donor-CU, the first donor-CU configures the IAB-node with updated uplink BH information for the traffic.

For example, in a case where a traffic of a migrating node is migrated from the topology of the second donor-CU back to the topology of the first donor-CU, the first donor-CU configures the migrating node with updated uplink BH information for the traffic.

In some embodiments, in a case where the traffic is migrated from the topology of the second donor-CU back to the topology of the first donor-CU, the first donor-CU configures the IAB-node to release at least one of the following: header rewriting information of a BAP between the topology of the first donor-CU and the topology of the second donor-CU, routing information in the topology of the second donor-CU, or BH RLC channel mapping information between the topology of the first donor-CU and the topology of the second donor-CU.

Since after a traffic of a child node is migrated back to the first donor-CU, a migrating node needs to release configuration information between topologies, the migrating node may be configured to release one of header rewriting information of a BAP, routing information, BH RLC channel mapping configuration, or any two of them, or all the three configurations, the present disclosure is not limited to this.

For example, in a case where the traffic of the child node is migrated from the topology of the second donor-CU back to the topology of the first donor-CU, the first donor-CU configures the migrating node to release at least one of the following: header rewriting information of a BAP between the topology of the first donor-CU and the topology of the second donor-CU, routing information in the topology of the second donor-CU, or BH RLC channel mapping information between the topology of the first donor-CU and the topology of the second donor-CU.

In some embodiments, in a case where the traffic is migrated from the topology of the second donor-CU back to the topology of the first donor-CU, the first donor-CU configures the IAB-node to add routing information in the topology of the first donor-CU and/or BH RLC channel mapping information in the topology of the first donor-CU.

For example, for an uplink and/or downlink traffic of the child node that is migrated back to the first donor-CU, the migrating node is configured to add routing information or BH RLC channel mapping information in the topology of the first donor-CU.

In some embodiments, the first donor-CU configures the IAB-node with an IP address anchored at a donor-DU of the first donor-CU.

For example, if the donor-DU of the first donor-CU has a source IP address filtering function, i.e., uplink data containing an IP address assigned by other donor-DU is discarded. When a traffic of the migrating node is migrated back to the topology of the first donor-CU, the migrating node needs to configure an IP address carried by an uplink traffic to be an IP address assigned by the donor-DU of the first donor-CU. Thus, the first donor-CU configures the IP address assigned by the donor-DU in the topology the first donor-CU to the migrating node.

The routing IDs of traffics (including uplink and downlink traffics) of the child node always belong to the routing ID of the topology the first donor-CU, but in a case where the traffics of the child node are migrated back to the topology the first donor-CU, the IP address anchored at a donor-DU of the second donor-CU needs to be replaced with an IP address anchored at a donor-DU of the first donor-CU. The child node selects a used IP address according to an address of the donor-DU of the first donor-CU, thus configuring an IP address of a traffic needs to direct at a BAP address of the donor-DU of the first donor-CU, including replacing an IP address anchored at a donor-DU of the second donor-CU with an IP address anchored at a donor-DU of the first donor-CU.

In the embodiments of the present disclosure, "IP address anchored at IAB donor-DU" may be understood as "an IP address assigned by the donor-DU" or "Transport Network Layer (TNL) address(es) that is (are) routable via the IAB-donor-DU", the terms are interchangeable, the present disclosure is not limited to this.

In some embodiments, the first donor-CU configures BAP sublayer routing and/or a backhaul (BH) radio link control (RLC) channel used by the traffic on a path in the topology of the first donor-CU.

In some embodiments, the first transport migration release request includes a traffic identifier needing to be released.

The following text further exemplarily describes a transport migration modification procedure initiated by the first donor-CU, by using signaling interaction.

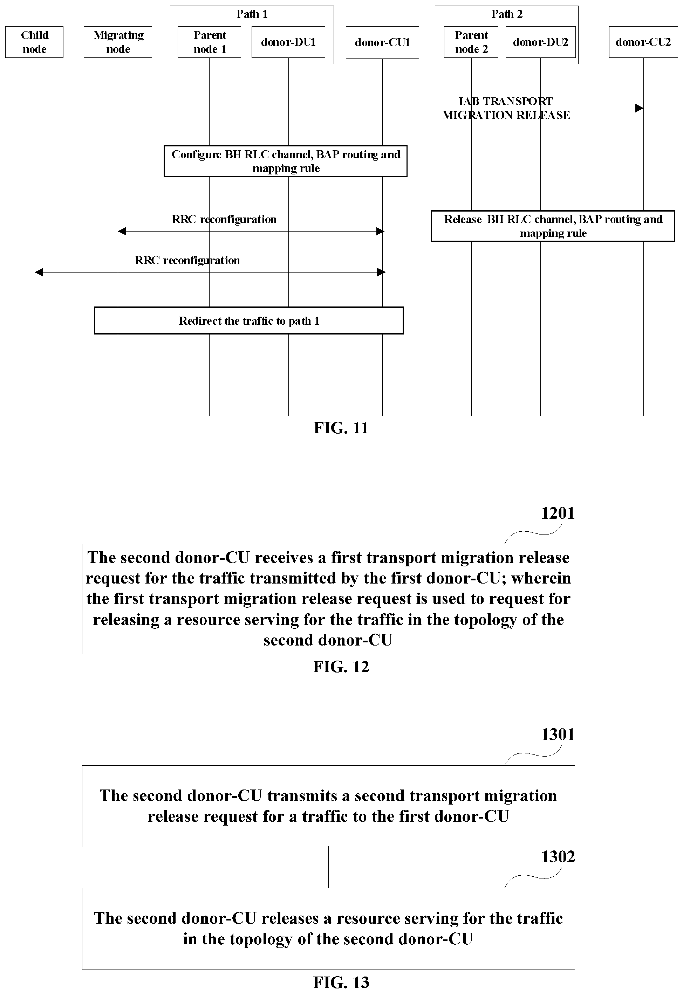

FIG. 11 is a signaling flow graph of transport migration release in the embodiments of the present disclosure. For example, when donor-CU 1 needs to migrate a traffic whose transport path has been migrated to the topology of donor-CU 2 back to the topology of donor-CU 1, or, when the traffic ends:
- donor-CU 1 transmits a first transport migration release request, which may include a traffic identifier needing to be released, to donor-CU 2 via a TRANSPORT MIGRATION MANAGEMENT REQUEST message or a TRANSPORT MIGRATION RELEASE message.

If a traffic that has been migrated to the topology of donor-CU 2 is migrated back to the topology of donor-CU 1, the migrating node redirects the traffic to the topology of donor-CU 2 (path 1 in FIG. 11).
donor-CU 1 needs to establish one or more resources used by the traffic in the topology of donor-CU 1. For example, donor-CU 1 configures the migrating node with uplink BH information (including a routing ID belonging to the topology of donor-CU 1, a BH RLC channel ID and a next-hop node address) for traffics (including traffics of a user plane and a non-user plane) of the migrating node via an F1AP message. For another example, donor-CU 1 may configure the migrating node to release inter-topology BAP header rewriting information related to the traffics of a child node, routing information belonging to the topology of donor-CU 2, and BH RLC channel mapping information between two topologies.

In addition, donor-CU 1 may configure the migrating node and the child node with an IP address anchored at a donor-DU of donor-CU 1 via an RRC reconfiguration message (because a traffic migrated back to donor-CU1 needs to use the donor-DU of donor-CU 1).

Optionally, donor-CU 1 may further configure a BH RLC channel and routing for a traffic on a path in the topology of donor-CU 1, and configure the migrating node with a routing table and an RLC channel mapping table belonging to the topology of donor-CU 1.

In this way, a transport path of the traffic may be migrated back to the topology of donor-CU 1.
donor-CU 1 needs to transmit a traffic flow identifier for requesting release to donor-CU 2. After receiving the first transport migration release request, donor-CU 2 releases a BH RLC channel and routing for a related traffic on the path in the topology of donor-CU 2. As shown in FIG. 11, donor-CU 2 does not need to transmit a transport migration release response to donor-CU 1.

The above signaling process only schematically describes the embodiments of the present disclosure, but the present disclosure is not limited to this. For more specific contents about signaling, relevant technologies may be further referred to. Moreover, for example, an execution step of each operation may be adjusted appropriately, moreover other some operations may be increased or reduced. Persons skilled in the art may make appropriate modifications according to the above contents, not limited to the records in the above FIG. 11.

In some embodiments, in a case where an IAB-MT of an IAB-node is handed over from the first donor-CU to the second donor-CU, and one or more resources serving for one or more traffics of the IAB-node (including a migrating node and a child node) have been established in a topology of a second donor-CU, the first donor-CU transmits a first transport migration release request for the one or more traffics.

For example, a transport migration release procedure initiated by donor-CU 1 may be performed after the migrating node is handed over from a parent node under F1-terminating CU to a parent node under non-F1-terminating CU, and all traffics are migrated to the topology of non-F 1-terminating CU.

In some embodiments, in a case where an IAB-MT of an IAB-node performs reestablishment from the first donor-CU to the second donor-CU, and one or more resources serving for one or more traffics of the IAB-node (including a migrating node and a child node) have been established in a topology of a second donor-CU, the first donor-CU transmits a first transport migration release request for the one or more traffics.

For example, a transport migration release procedure initiated by donor-CU 1 may be performed after the migrating node performs reestablishment from a parent node under F 1-terminating CU to a parent node under non-F1-terminating CU, and all traffics are migrated to the topology of non-F 1-terminating CU.

In some embodiments, in a case where an IAB-MT of an IAB-node establishes dual-connection with the first donor-CU and the second donor-CU, and one or more resources serving for one or more traffics of the IAB-node (including a migrating node and a child node) have been established in a topology of a second donor-CU, the first donor-CU transmits a first transport migration release request for the one or more traffics.

For example, a transport migration release procedure initiated by donor-CU 1 may be performed after the migrating node establishes dual-connection with a F1-terminating CU and a non-F1-terminating CU, and transport paths of some traffics are migrated to the topology of non-F 1-terminating CU.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

As can be known from the above embodiments, the first donor-CU transmits a first transport migration release request for the traffic to the second donor-CU, wherein the first transport migration release request is used to request for releasing a resource serving for the traffic in the topology of the second donor-CU. Thereby, the second donor-CU may release transport resources serving for the traffic, so that the traffic is migrated back to the topology of the first donor-CU or the transport of the traffic stops, so as to improve system efficiency and performance.

### Embodiments of a second aspect

The embodiments of the present disclosure provide a transport migration management method, which is described from a second donor-CU. The contents same as the embodiments of the first aspect are not repeated. An IAB-DU of an IAB-node maintains F1 connection with a first donor-CU, and a resource serving for a traffic of the IAB-node has been established in a topology of a second donor-CU.

FIG. 12 is another schematic diagram of a transport migration management method in the embodiments of the present disclosure. As shown in FIG. 12, the method includes:
1201, the second donor-CU receives a first transport migration release request for the traffic transmitted by the first donor-CU; wherein the first transport migration release request is used to request for releasing a resource serving for the traffic in the topology of the second donor-CU.

It should be noted that the above FIG. 12 is only schematic description of the embodiments of the present disclosure, but the present disclosure is not limited to this. For example, an execution step of each operation can be adjusted appropriately, moreover other some operations can be increased or reduced. Persons skilled in the art can make appropriate modifications according to the above contents, not limited to the records in the above FIG. 12.

In some embodiments, the IAB-MT of the IAB-node maintains an RRC connection with the second donor-CU, or the IAB-MT of the IAB-node maintains an RRC connection with the first donor-CU.

In some embodiments, the traffic includes at least one or a combination of the following: an F1 control plane (F 1-C) traffic, an F1 user plane (F 1-U) traffic, or a non-F1 traffic.

In some embodiments, when the traffic is migrated from the topology of the second donor-CU back to the topology of the first donor-CU, or when the traffic ends, the second donor-CU receives a first transport migration release request for the traffic transmitted by the first donor-CU.

In some embodiments, the second donor-CU receives the first transport migration release request via a first TRANSPORT MIGRATION MANAGEMENT REQUEST message.

In some embodiments, the first transport migration release request includes a traffic identifier needing to be released.

In some embodiments, after receiving the first transport migration release request, the second donor-CU releases BAP sublayer routing and/or a BH RLC channel used by the traffic on a path in the topology of the second donor-CU.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

As can be known from the above embodiments, the first donor-CU transmits a first transport migration release request for the traffic to the second donor-CU, wherein the first transport migration release request is used to request for releasing a resource serving for the traffic in the topology of the second donor-CU. Thereby, the second donor-CU may release transport resources serving for the traffic, so that the traffic is migrated back to the topology of the first donor-CU or the transport of the traffic stops, so as to improve system efficiency and performance.

### Embodiments of a third aspect

The embodiments of the present disclosure provide a transport migration management method, which is described from a second donor centralized unit (donor-CU) side. An IAB-DU of an IAB-node maintains F1 connection with a first donor centralized unit (donor-CU), and a resource serving for a traffic of the IAB-node has been established in a topology of a second donor-CU.

FIG. 13 is a schematic diagram of a transport migration management method in the embodiments of the present disclosure. As shown in FIG. 13, the method includes:
1301, the second donor-CU transmits a second transport migration release request for the traffic to the first donor-CU; and
1302, the second donor-CU releases a resource serving for the traffic in the topology of the second donor-CU.

It should be noted that the above FIG. 13 is only schematic description of the embodiments of the present disclosure, but the present disclosure is not limited to this. For example, an execution step of each operation can be adjusted appropriately, moreover other some operations can be increased or reduced. Persons skilled in the art can make appropriate modifications according to the above contents, not limited to the records in the above FIG. 13.

In some embodiments, in a case where the traffic is migrated from the topology of the second donor-CU back to the topology of the first donor-CU, the second donor-CU transmits a second transport migration release request for the traffic to the first donor-CU.

In some embodiments, the second donor-CU transmits the second transport migration release request via a second TRANSPORT MIGRATION MANAGEMENT REQUEST message. However, the present disclosure is not limited to this, other messages may also carry a second transport migration release request.

In some embodiments, the second transport migration release request includes a traffic identifier needing to be released.

In some embodiments, the second donor-CU receives a transport migration release response transmitted by the first donor-CU.

In some embodiments, the second donor-CU receives the transport migration release response transmitted by the first donor-CU via a TRANSPORT MIGRATION MANAGEMENT RESPONSE message. However, the present disclosure is not limited to this, other messages may also carry a transport migration release response.

Optionally, the transport migration release response includes a traffic identifier that is successfully released.

In some embodiments, after receiving the transport migration release response, the second donor-CU releases BAP sublayer routing and/or a BH RLC channel used by the traffic on a path in the topology of the second donor-CU.

Thereby, when the second donor-CU needs to migrate a traffic back to the topology of the first donor-CU, for example when a load in the topology of the second donor-CU is higher, by transmitting a second transport migration release request by the second donor-CU to the first donor-CU and releasing one or more resources serving for the traffic in the topology of the second donor-CU, the traffic may be migrated back to the topology of the first donor-CU, so that the traffic continues to be transmitted in the topology of the first donor-CU, thus avoiding traffic interruption.

The following text schematically describes the cases in which a transport migration release request for a traffic fails.

In some embodiments, the second donor-CU receives a transport migration release response transmitted by the first donor-CU and used for rejecting a second transport migration release request for the traffic.

In some embodiments, the second donor-CU receives the transport migration release response via a TRANSPORT MIGRATION MANAGEMENT RESPONSE message.

In some embodiments, the transport migration release response includes a traffic identifier of the traffic.

The following text further exemplarily describes a transport migration release procedure initiated by the second donor-CU, by using signaling interaction.

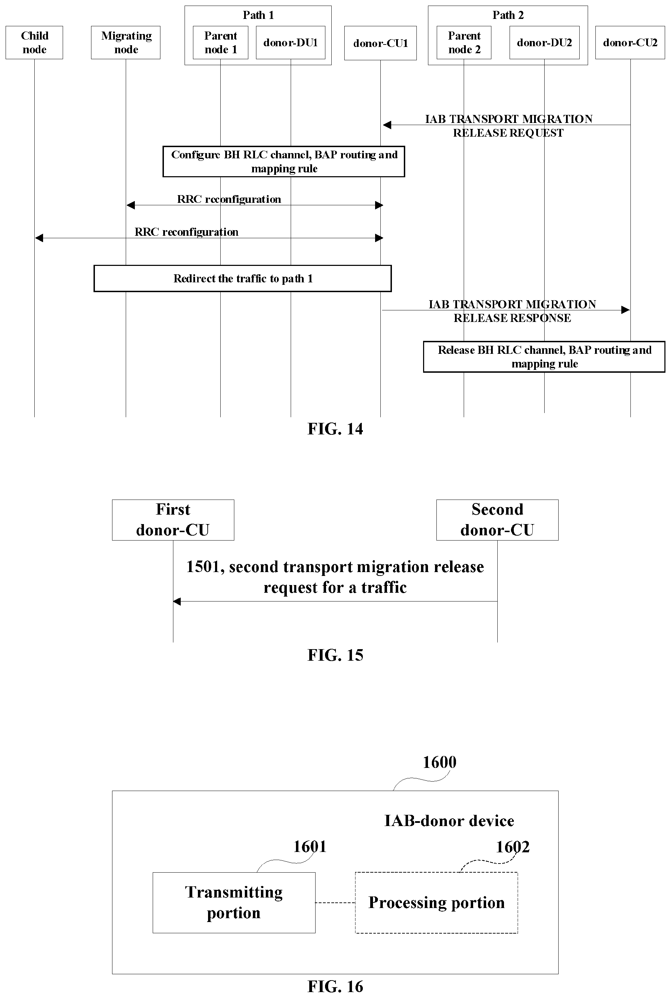

FIG. 14 is a signaling flow graph of transport migration release in the embodiments of the present disclosure. For example, when a network load of donor-CU 2 is larger, and a traffic that has been migrated to the topology of donor-CU 2 is migrated back to the topology of donor-CU 1, donor-CU 2 initiates a second transport migration release request to donor-CU 1 via a TRANSPORT MIGRATION MANAGEMENT REQUEST message or a TRANSPORT MIGRATION RELEASE message.
donor-CU 2 may transmit a traffic flow identifier for requesting release to donor-CU 1.

If donor-CU 1 accepts the transport migration release request, donor-CU 1 migrates related traffics back to the topology of donor-CU 1, the migrating node redirects the traffics to the topology of donor-CU 2 (path 1 in FIG. 14).
- donor-CU 1 needs to establish one or more resources used by the traffics in the topology of donor-CU 1. For example, for a traffic of a child node that requests release, the migrating node is configured to release BAP header rewriting information between topologies related to the traffic, routing information belonging to the topology of donor-CU 2, and BH RLC channel mapping information between two topologies; for a traffic of the migrating node that requests release, the migrating node is configured with uplink BH information (including a routing ID belonging to the topology of donor-CU 1, a BH RLC channel ID, and a next-hop node address) in the topology of donor-CU 1.
- optionally, a BH RLC channel and routing for a traffic on a path in the topology of donor-CU 1 are configured, and the migrating is configured with routing information belonging to the topology of donor-CU 1, and BH RLC channel mapping information.

In addition, donor-CU 1 may configure the migrating node and the child node with an IP address anchored at a donor-DU of donor-CU 1 via an RRC reconfiguration message (because a traffic migrated back to donor-CU1 needs to use the donor-DU of donor-CU 1).

In this way, a transport path of the traffic may be migrated back to the topology of donor-CU 1. donor-CU 1 transmits a response for successfully releasing a migrated traffic to donor-CU 2, including a traffic identifier that is released successfully.

If a load of donor-CU 1 is heavier, QoS requirements cannot be met after a traffic is migrated back to the donor-DU of donor-CU 1, donor-CU 1 may reject the second transport migration release request, donor-CU 1 transmits a traffic identifier that rejects release to donor-CU 2.

If donor-CU 1 transmits the response for successfully releasing a migrated traffic to donor-CU 2, donor-CU 2 releases a BH RLC channel and routing of a relevant traffic on a path in the topology of donor-CU 2.

The above signaling process only schematically describes the embodiments of the present disclosure, but the present disclosure is not limited to this. For more specific contents about signaling, relevant technologies may be further referred to. Moreover, for example, an execution step of each operation can be adjusted appropriately, moreover other some operations can be increased or reduced. Persons skilled in the art can make appropriate modifications according to the above contents, not limited to the records in the above FIG. 14.

In some embodiments, in a case where an IAB-MT of an IAB-node is handed over from the first donor-CU to the second donor-CU, and one or more resources serving for one or more traffics of the IAB-node (including a migrating node and a child node) have been established in a topology of a second donor-CU, the second donor-CU transmits a second transport migration release request for the one or more traffics.

For example, a transport migration release procedure initiated by donor-CU 2 may be performed after the migrating node is handed over from a parent node under F1-terminating CU to a parent node under non-F1-terminating CU, and all traffics are migrated to the topology of non-F 1-terminating CU.

In some embodiments, in a case where an IAB-MT of an IAB-node performs reestablishment from the first donor-CU to the second donor-CU, and one or more resources serving for one or more traffics of the IAB-node (including a migrating node and a child node) have been established in a topology of a second donor-CU, the second donor-CU transmits a second transport migration release request for the one or more traffics.

For example, a transport migration release procedure initiated by donor-CU 2 may be performed after the migrating node performs reestablishment from a parent node under F 1-terminating CU to a parent node under non-F1-terminating CU, and all traffics are migrated to the topology of non-F 1-terminating CU.

In some embodiments, in a case where an IAB-MT of an IAB-node establishes dual-connection with the first donor-CU and the second donor-CU, and one or more resources serving for one or more traffics of the IAB-node (including a migrating node and a child node) have been established in a topology of a second donor-CU, the second donor-CU transmits a second transport migration release request for the one or more traffics.

For example, a transport migration release procedure initiated by donor-CU 2 may be performed after the migrating node establishes dual-connection with a F1-terminating CU and a non-F1-terminating CU, and transport paths of some traffics are migrated to the topology of non-F 1-terminating CU.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

As can be known from the above embodiments, the second donor-CU transmits to the first donor-CU a second transport migration release request for the traffic; and the second donor-CU releases a resource serving for the traffic in the topology of the second donor-CU. Thereby, transport resources serving for the traffic may be released, the traffic is migrated back to the topology of the first donor-CU, so that the traffic continues to be transmitted in the topology of the first donor-CU, thus avoiding traffic interruption.

### Embodiments of a fourth aspect

The embodiments of the present disclosure provide a transport migration management method, which is described from a first donor-CU. The contents same as the embodiments of the third aspect are not repeated. An IAB-DU of an IAB-node maintains F1 connection with a first donor-CU, and a resource serving for a traffic of the IAB-node has been established in a topology of a second donor-CU.

FIG. 15 is another schematic diagram of a transport migration management method in the embodiments of the present disclosure. As shown in FIG. 15, the method includes:
1501, the first donor-CU receives a second transport migration release request for the traffic transmitted by the second donor-CU; wherein the second donor-CU releases a resource serving for the traffic in the topology of the second donor-CU.

It should be noted that the above FIG. 15 is only schematic description of the embodiments of the present disclosure, but the present disclosure is not limited to this. For example, an execution step of each operation can be adjusted appropriately, moreover other some operations can be increased or reduced. Persons skilled in the art can make appropriate modifications according to the above contents, not limited to the records in the above FIG. 15.

In some embodiments, in a case where the traffic is migrated from the topology of the second donor-CU back to the topology of the first donor-CU, the first donor-CU receives a second transport migration release request for the traffic, transmitted by the second donor-CU.

In some embodiments, the first donor-CU receives the second transport migration release request via a second TRANSPORT MIGRATION MANAGEMENT REQUEST message.

In some embodiments, the second transport migration release request includes a traffic identifier needing to be released.

In some embodiments, in a case where the traffic is migrated from the topology of the second donor-CU back to the topology of the first donor-CU, the first donor-CU configures the IAB-node with updated uplink BH information for the traffic.

In some embodiments, in a case where the traffic is migrated from the topology of the second donor-CU back to the topology of the first donor-CU, the first donor-CU configures the IAB-node to release at least one of the following: header rewriting information of a BAP between the topology of the first donor-CU and the topology of the second donor-CU, routing information in the topology of the second donor-CU, or BH RLC channel mapping information between the topology of the first donor-CU and the topology of the second donor-CU.

In some embodiments, in a case where the traffic is migrated from the topology of the second donor-CU back to the topology of the first donor-CU, the first donor-CU configures the IAB-node to add routing information in the topology of the first donor-CU and/or BH RLC channel mapping information in the topology of the first donor-CU.

In some embodiments, the first donor-CU configures the IAB-node with an IP address anchored at a donor-DU of the first donor-CU.

In some embodiments, the first donor-CU configures BAP sublayer routing and/or a backhaul (BH) radio link control (RLC) channel used by the traffic on a path in the topology of the first donor-CU.

In some embodiments, the first donor-CU transmits a transport migration release response to the second donor-CU.

In some embodiments, the first donor-CU transmits the transport migration release response via a TRANSPORT MIGRATION MANAGEMENT RESPONSE message.

In some embodiments, the transport migration release response includes a traffic identifier that is successfully released.

In some embodiments, the first donor-CU rejects a second transport migration release request for the traffic after receiving the second transport migration release request.

For example, in a case where quality of service (QoS) of the traffic cannot be satisfied, the first donor-CU rejects a second transport migration release request for the traffic.

In some embodiments, the first donor-CU transmits a transport migration release response to the second donor-CU and used for rejecting a second transport migration release request for the traffic.

In some embodiments, the first donor-CU transmits the transport migration release response via a TRANSPORT MIGRATION MANAGEMENT RESPONSE message.

In some embodiments, the transport migration release response includes a traffic identifier of the traffic.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

As can be known from the above embodiments, the second donor-CU transmits to the first donor-CU a second transport migration release request for the traffic; and the second donor-CU releases a resource serving for the traffic in the topology of the second donor-CU. Thereby, transport resources serving for the traffic may be released, the traffic is migrated back to the topology of the first donor-CU, so that the traffic continues to be transmitted in the topology of the first donor-CU, thus avoiding traffic interruption.

### Embodiments of a fifth aspect

The embodiments of the present disclosure provide an IAB-donor device, the contents same as the embodiments of the first aspect are not repeated. The device e.g. may be an IAB donor-CU in an IAB system (the first donor-CU in the embodiments of the first and second aspects), or may be a component or component(s) or assemblies or modules configured in the IAB donor-CU.

FIG. 16 is a schematic diagram of an IAB-donor device in the embodiments of the present disclosure. An IAB-DU of an IAB-node maintains F1 connection with a first donor centralized unit (donor-CU), and a resource serving for a traffic of the IAB-node has been established in a topology of a second donor-CU.

As shown in FIG. 16, the IAB-donor device 1600 includes:
a transmitting portion 1601 configured to transmit a first transport migration release request for the traffic to the second donor-CU, wherein the first transport migration release request is used to request for releasing a resource serving for the traffic in the topology of the second donor-CU.

In some embodiments, the IAB-MT of the IAB-node maintains an RRC connection with the second donor-CU, or the IAB-MT of the IAB-node maintains an RRC connection with the first donor-CU.

In some embodiments, the traffic includes at least one or a combination of the following: an F1 control plane traffic, an F1 user plane traffic, or a non-F1 traffic.

In some embodiments, in a case where the traffic is migrated from the topology of the second donor-CU back to the topology of the first donor-CU, or when the traffic ends, the transmitting portion 1601 transmits a first transport migration release request for the traffic to the second donor-CU.

In some embodiments, a first transport migration release request is transmitted via a first transport migration management request message.

In some embodiments, as shown in FIG. 16, the IAB-donor device 1600 may further include:
a processing portion 1602 configuring the IAB-node with updated uplink BH information for the traffic;

In some embodiments, the processing portion 1602 configures the IAB-node to release at least one of the following: header rewriting information of a BAP between the topology of the first donor-CU and the topology of the second donor-CU, routing information in the topology of the second donor-CU, or BH RLC channel mapping information between the topology of the first donor-CU and the topology of the second donor-CU.

In some embodiments, the processing portion 1602 configures the IAB-node to add routing information in the topology of the first donor-CU and/or BH RLC channel mapping information in the topology of the first donor-CU.

In some embodiments, the processing portion 1602 configures the IAB-node with an IP address anchored at a donor-DU of the first donor-CU.

In some embodiments, the processing portion 1602 configures BAP sublayer routing and/or a backhaul (BH) radio link control (RLC) channel used by the traffic on a path in the topology of the first donor-CU.

In some embodiments, the first transport migration release request includes a traffic identifier needing to be released.

In some embodiments, in a case where an IAB-MT of an IAB-node is handed over from the first donor-CU to the second donor-CU, and one or more resources serving for one or more traffics of the IAB-node have been established in the topology of the second donor-CU, the transmitting portion 1601 transmits a first transport migration release request for the one or more traffics.

In some embodiments, in a case where an IAB-MT of an IAB-node performs reestablishment from the first donor-CU to the second donor-CU, and one or more resources serving for one or more traffics of the IAB-node have been established in the topology of the second donor-CU, the transmitting portion 1601 transmits a first transport migration release request for the one or more traffics.

In some embodiments, in a case where an IAB-MT of an IAB-node establishes dual-connection with the first donor-CU and the second donor-CU, and one or more resources serving for one or more traffics of the IAB-node have been established in the topology of the second donor-CU, the transmitting portion 1601 transmits a first transport migration release request for the one or more traffics.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-donor device 1600 in the embodiments of the present disclosure may further include other components or modules. For detailed contents of these components or modules, relevant technologies can be referred to.

Moreover, for the sake of simplicity, FIG. 16 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, the first donor-CU transmits a first transport migration release request for the traffic to the second donor-CU, wherein the first transport migration release request is used to request for releasing a resource serving for the traffic in the topology of the second donor-CU. Thereby, the second donor-CU may release transport resources serving for the traffic, so that the traffic is migrated back to the topology of the first donor-CU or the transport of the traffic stops, so as to improve system efficiency and performance.

### Embodiments of a sixth aspect

The embodiments of the present disclosure provide an IAB-donor device, the contents same as the embodiments of the second aspect are not repeated. The device e.g. may be an IAB donor-CU in an IAB system (the second donor-CU in the embodiments of the first and second aspects), or may be a component or component(s) or assemblies or modules configured in the IAB donor-CU.

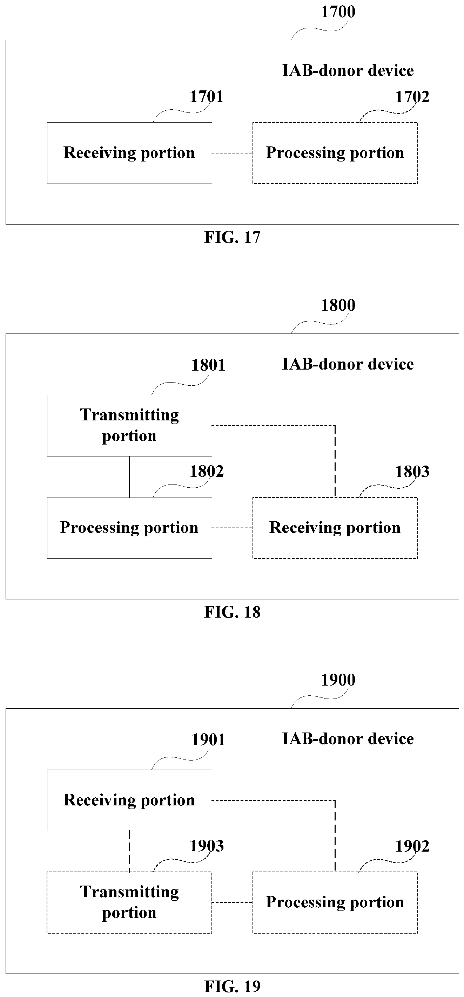

FIG. 17 is a schematic diagram of an IAB-donor device in the embodiments of the present disclosure. An IAB-DU of an IAB-node maintains F1 connection with a first donor-CU, and a resource serving for a traffic of the IAB-node has been established in a topology of a second donor-CU.

As shown in FIG. 17, the IAB-donor device 1700 includes:
a receiving portion 1701 configured to receive a first transport migration release request for the traffic transmitted by the first donor-CU, wherein the first transport migration release request is used to request for releasing a resource serving for the traffic in the topology of the second donor-CU.

In some embodiments, the IAB-MT of the IAB-node maintains an RRC connection with the second donor-CU, or the IAB-MT of the IAB-node maintains an RRC connection with the first donor-CU.

In some embodiments, the traffic includes at least one or a combination of the following: an F1 control plane (F 1-C) traffic, an F1 user plane (F 1-U) traffic, or a non-F1 traffic.

In some embodiments, when the traffic is migrated from the topology of the second donor-CU back to the topology of the first donor-CU, or when the traffic ends, the receiving portion 1701 receives a first transport migration release request for the traffic transmitted by the first donor-CU.

In some embodiments, a first transport migration release request is received via a first transport migration management request message.

In some embodiments, the first transport migration release request includes a traffic identifier needing to be released.

In some embodiments, as shown in FIG. 17, the IAB-donor device 1700 may further include:
a processing portion 1702, after receiving the first transport migration release request, releases BAP sublayer routing and/or a BH RLC channel used by the traffic on a path in the topology of the second donor-CU.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-donor device 1700 in the embodiments of the present disclosure may further include other components or modules. For detailed contents of these components or modules, relevant technologies can be referred to.

Moreover, for the sake of simplicity, FIG. 17 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, the first donor-CU transmits a first transport migration release request for the traffic to the second donor-CU, wherein the first transport migration release request is used to request for releasing a resource serving for the traffic in the topology of the second donor-CU. Thereby, the second donor-CU may release transport resources serving for the traffic, so that the traffic is migrated back to the topology of the first donor-CU or the transport of the traffic stops, so as to improve system efficiency and performance.

### Embodiments of a seventh aspect

The embodiments of the present disclosure provide an IAB-donor device, the contents same as the embodiments of the third aspect are not repeated. The device e.g. may be an IAB donor-CU in an IAB system (the second donor-CU in the embodiments of the third and fourth aspects), or may be a component or component(s) or assemblies or modules configured in the IAB donor-CU.

FIG. 18 is a schematic diagram of an IAB-donor device in the embodiments of the present disclosure. An IAB-DU of an IAB-node maintains F1 connection with a first donor centralized unit (donor-CU), and a resource serving for a traffic of the IAB-node has been established in a topology of a second donor-CU.

As shown in FIG. 18, the IAB-donor device 1800 includes:
a transmitting portion 1801 configured to transmit a second transport migration release request for the traffic to the first donor-CU; and
a processing portion 1802 configured to release a resource serving for the traffic in the topology of the second donor-CU.

In some embodiments, in a case where the traffic is migrated from the topology of the second donor-CU back to the topology of the first donor-CU, the transmitting portion 1801 transmits a second transport migration release request for the traffic to the first donor-CU.

In some embodiments, the second transport migration release request is transmitted via a second TRANSPORT MIGRATION MANAGEMENT REQUEST message.

In some embodiments, the second transport migration release request includes a traffic identifier needing to be released.

In some embodiments, as shown in FIG. 18, the IAB-donor device 1800 may further include:
a receiving portion 1803 configured to receive a transport migration release response transmitted by the first donor-CU.

In some embodiments, the transport migration release response transmitted by the first donor-CU is received via a TRANSPORT MIGRATION MANAGEMENT RESPONSE message.

In some embodiments, the receiving portion 1803 further receives a transport migration release response transmitted by the first donor-CU and used for rejecting a second transport migration release request for the traffic.

In some embodiments, the transport migration release response is received via a TRANSPORT MIGRATION MANAGEMENT RESPONSE message.

In some embodiments, the transport migration release response includes a traffic identifier of the traffic.

In some embodiments, in a case where an IAB-MT of an IAB-node is handed over from the first donor-CU to the second donor-CU, and one or more resources serving for one or more traffics of the IAB-node have been established in the topology of the second donor-CU, the transmitting portion 1801 transmits a second transport migration release request for the one or more traffics.

In some embodiments, in a case where an IAB-MT of an IAB-node performs reestablishment from the first donor-CU to the second donor-CU, and one or more resources serving for one or more traffics of the IAB-node have been established in the topology of the second donor-CU, the transmitting portion 1801 transmits a second transport migration release request for the one or more traffics.

In some embodiments, in a case where an IAB-MT of an IAB-node establishes dual-connection with the first donor-CU and the second donor-CU, and one or more resources serving for one or more traffics of the IAB-node have been established in the topology of the second donor-CU, the transmitting portion 1801 transmits a second transport migration release request for the one or more traffics.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-donor device 1800 in the embodiments of the present disclosure may further include other components or modules. For detailed contents of these components or modules, relevant technologies can be referred to.

Moreover, for the sake of simplicity, FIG. 18 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, the second donor-CU transmits to the first donor-CU a second transport migration release request for the traffic; and the second donor-CU releases a resource serving for the traffic in the topology of the second donor-CU. Thereby, transport resources serving for the traffic may be released, the traffic is migrated back to the topology of the first donor-CU, so that the traffic continues to be transmitted in the topology of the first donor-CU, thus avoiding traffic interruption.

### Embodiments of an eighth aspect

The embodiments of the present disclosure provide an IAB-donor device, the contents same as the embodiments of the fourth aspect are not repeated. The device e.g. may be an IAB donor-CU in an IAB system (the first donor-CU in the embodiments of the third and fourth aspects), or may be a component or component(s) or assemblies or modules configured in the IAB donor-CU.

FIG. 19 is a schematic diagram of an IAB-donor device in the embodiments of the present disclosure. An IAB-DU of an IAB-node maintains F1 connection with a first donor-CU, and a resource serving for a traffic of the IAB-node has been established in a topology of a second donor-CU.

As shown in FIG. 19, the IAB-donor device 1900 includes:
a receiving portion 1901 configured to receive a second transport migration release request for the traffic transmitted by the second donor-CU; wherein the second donor-CU releases a resource serving for the traffic in the topology of the second donor-CU.

In some embodiments, in a case where the traffic is migrated from the topology of the second donor-CU back to the topology of the first donor-CU, the receiving portion 1901 receives a second transport migration release request for the traffic, transmitted by the second donor-CU.

In some embodiments, a second transport migration release request is received via a second transport migration management request message.

In some embodiments, the second transport migration release request includes a traffic identifier needing to be released.

In some embodiments, as shown in FIG. 19, the IAB-donor device 1900 may further include:
a processing portion 1902 configuring the IAB-node with updated uplink BH information for the traffic;

In some embodiments, the processing portion 1902 configures the IAB-node to release at least one of the following: header rewriting information of a BAP between the topology of the first donor-CU and the topology of the second donor-CU, routing information in the topology of the second donor-CU, or BH RLC channel mapping information between the topology of the first donor-CU and the topology of the second donor-CU.

In some embodiments, the processing portion 1902 configures the IAB-node to add routing information in the topology of the first donor-CU and/or BH RLC channel mapping information in the topology of the first donor-CU.

In some embodiments, the processing portion 1902 configures the IAB-node with an IP address anchored at a donor-DU of the first donor-CU.

In some embodiments, the processing portion 1902 configures BAP sublayer routing and/or a backhaul (BH) radio link control (RLC) channel used by the traffic on a path in the topology of the first donor-CU.

In some embodiments, as shown in FIG. 19, the IAB-donor device 1900 may further include:
a transmitting portion 1903 configured to transmit a transport migration release response to the second donor-CU.

In some embodiments, the transport migration release response is transmitted via a TRANSPORT MIGRATION MANAGEMENT RESPONSE message.

In some embodiments, the processing portion 1902 rejects a second transport migration release request for the traffic after receiving the second transport migration release request.

For example, in a case where quality of service (QoS) of the traffic cannot be satisfied, the processing portion 1902 rejects a second transport migration release request for the traffic.

In some embodiments, the transmitting portion 1903 further transmit a transport migration release response used for rejecting a second transport migration release request for the traffic, to the second donor-CU.

In some embodiments, the transport migration release response is transmitted via a transport migration management response message.

In some embodiments, the transport migration release response includes a traffic identifier of the traffic.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-donor device 1900 in the embodiments of the present disclosure may further include other components or modules. For detailed contents of these components or modules, relevant technologies can be referred to.

Moreover, for the sake of simplicity, FIG. 19 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, the second donor-CU transmits to the first donor-CU a second transport migration release request for the traffic; and the second donor-CU releases a resource serving for the traffic in the topology of the second donor-CU. Thereby, transport resources serving for the traffic may be released, the traffic is migrated back to the topology of the first donor-CU, so that the traffic continues to be transmitted in the topology of the first donor-CU, thus avoiding traffic interruption.

### Embodiments of a ninth aspect

The embodiments of the present disclosure provide a communication system, including a donor device and an IAB-node; for a network architecture of the donor device and the IAB-node, relevant technologies may be further referred to, description will be omitted here.

In some embodiments, an IAB system includes:
a first donor centralized unit (a first donor-CU) configured to transmit a first transport migration release request for the traffic; wherein the first transport migration release request is used to request for releasing a resource serving for the traffic in the topology of the second donor-CU;
a second donor centralized unit (a second donor-CU) configured to receive the first transport migration release request.

In some embodiments, an IAB system includes:
a second donor centralized unit (a second donor-CU) configured to transmit a second transport migration release request for the traffic, and release a resource serving for the traffic in a topology of the second donor-CU;
a first donor centralized unit (a first donor-CU) configured to receive the second transport migration release request.

The embodiments of the present disclosure further provide an IAB device, which may be an IAB-donor device, or may be an IAB-node device (migrating node or child node).

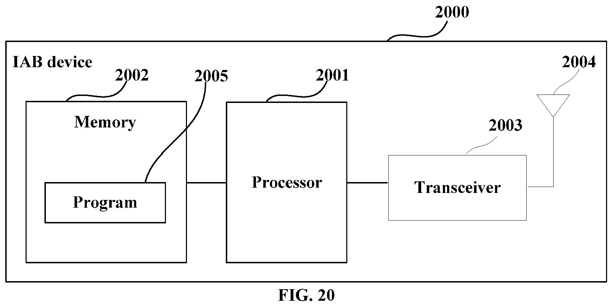

FIG. 20 is a schematic diagram of an IAB device in the embodiments of the present disclosure. As shown in FIG. 20, the IAB device 2000 may include: a processor (such as a central processing unit (CPU)) 2001 and a memory 2002; the memory 2002 is coupled to the processor 2001. The memory 2002 may store various data; moreover, also stores a program 2005 for information processing, and executes the program 2005 under the control of the central processor 2001.

For example, the processor 2001 may be configured to execute a program to implement the transport migration management method in the embodiments of the first aspect. For example, the processor 2001 may be configured to perform the following control: transmitting a first transport migration release request for the traffic to the second donor-CU, wherein the first transport migration release request is used to request for releasing a resource serving for the traffic in the topology of the second donor-CU.

For another example, the processor 2001 may be configured to execute a program to implement the transport migration management method in the embodiments of the second aspect. For example, the processor 2001 may be configured to perform the following control: receiving a first transport migration release request for the traffic transmitted by the first donor-CU, wherein the first transport migration release request is used to request for releasing a resource serving for the traffic in the topology of the second donor-CU.

For another example, the processor 2001 may be configured to execute a program to implement the transport migration management method in the embodiments of the third aspect. For example, the processor 2001 may be configured to perform the following control: transmitting a second transport migration release request for the traffic to a first donor-CU; and releasing a resource serving for the traffic in the topology of the second donor-CU.

For another example, the processor 2001 may be configured to execute a program to implement the transport migration management method in the embodiments of the fourth aspect. For example, the processor 2001 may be configured to perform the following control: receiving a second transport migration release request for the traffic transmitted by the second donor-CU; wherein the second donor-CU releases a resource serving for the traffic in the topology of the second donor-CU.

In addition, as shown in FIG. 20, the IAB device 2000 may further include: a transceiver 2003 and an antenna 2004, etc.; wherein the functions of said components are similar to relevant arts, which are not repeated here. It's worth noting that the IAB device 2000 does not have to include all the components shown in FIG. 20. Moreover, the IAB device 2000 may also include components not shown in FIG. 20, relevant arts may be referred to.

The embodiments of the present disclosure further provide a computer readable program, wherein when an IAB device executes the program, the program enables a computer to execute the transport migration management method in the embodiments of the first to fourth aspects, in the IAB device.

The embodiments of the present disclosure further provide a storage medium in which a computer readable program is stored, wherein the computer readable program enables a computer to execute the transport migration management method in the embodiments of the first to fourth aspects, in the IAB device.

The device and method in the present disclosure can be realized by hardware, or can be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The logic component is e.g. a field programmable logic component, a microprocessor, a processor used in a computer, etc. The present disclosure also relates to a storage medium storing the program, such as a hard disk, a magnetic disk, an optical disk, a DVD, a flash memory and the like.

By combining with the method/apparatus described in the embodiments of the present disclosure, it can be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules can be realized by solidifying these software modules e.g. using a field-programmable gate array (FPGA).

A software module can be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module can be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module can be stored in the MEGA-SIM card or the flash memory apparatus with a large capacity.

One or more in the functional block diagram or one or more combinations in the functional block diagram as described in the drawings can be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings can be also implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art can make various variations and modifications to the present disclosure based on the principle of the present disclosure, these variations and modifications are also within the scope of the present disclosure.

Regarding the above implementations disclosed in this embodiment, the following supplements are further disclosed:
1. A transport migration management method, wherein an IAB-DU of an IAB-node maintains F1 connection with a first donor centralized unit (donor-CU), and a resource serving for a traffic of the IAB-node has been established in a topology of a second donor-CU, and the method includes:
   the first donor-CU transmits a first transport migration release request for the traffic to the second donor-CU, wherein the first transport migration release request is used to request for releasing a resource serving for the traffic in the topology of the second donor-CU.
2. The method according to Supplement 1, wherein the IAB-MT of the IAB-node maintains an RRC connection with the second donor-CU, or the IAB-MT of the IAB-node maintains an RRC connection with the first donor-CU.
3. The method according to Supplement 1 or 2, wherein the traffic includes at least one or a combination of the following: an F1 control plane (F1-C) traffic, an F1 user plane (F1-U) traffic, or a non-F1 traffic.
4. The method according to any one of Supplements 1 to 3, wherein in a case where the traffic is migrated from the topology of the second donor-CU back to the topology of the first donor-CU, or when the traffic ends, the first donor-CU transmits a first transport migration release request for the traffic to the second donor-CU.
5. The method according to any one of Supplements 1 to 4, wherein the first donor-CU transmits the first transport migration release request via a first TRANSPORT MIGRATION MANAGEMENT REQUEST message.
6. The method according to any one of Supplements 1 to 5, wherein in a case where the traffic is migrated from the topology of the second donor-CU back to the topology of the first donor-CU, the method further includes:
   the first donor-CU configures the IAB-node with uplink BH information that updates the traffic.
7. The method according to any one of Supplements 1 to 6, wherein in a case where the traffic is migrated from the topology of the second donor-CU back to the topology of the first donor-CU, the method further includes:
   the first donor-CU configures the IAB-node to release at least one of the following: header rewriting information of a BAP between the topology of the first donor-CU and the topology of the second donor-CU, routing information in the topology of the second donor-CU, or BH RLC channel mapping information between the topology of the first donor-CU and the topology of the second donor-CU.
8. The method according to any one of Supplements 1 to 7, wherein in a case where the traffic is migrated from the topology of the second donor-CU back to the topology of the first donor-CU, the method further includes:
   the first donor-CU configures the IAB-node to add routing information in the topology of the first donor-CU and/or BH RLC channel mapping information in the topology of the first donor-CU.
9. The method according to any one of Supplements 1 to 8, wherein, the method further includes:
   the first donor-CU configures the IAB-node with an IP address anchored at a donor-DU of the first donor-CU.
10. The method according to any one of Supplements 1 to 9, wherein, the method further includes:
   the first donor-CU configures BAP sublayer routing and/or a backhaul (BH) radio link control (RLC) channel used by the traffic on a path in the topology of the first donor-CU.
11. The method according to any one of Supplements 1 to 10, wherein the first transport migration release request includes a traffic identifier needing to be released.
12. The method according to any one of Supplements 1 to 11, wherein in a case where an IAB-MT of an IAB-node is handed over from the first donor-CU to the second donor-CU, and a resource serving for one or more traffics of the IAB-node has been established in the topology of the second donor-CU, the first donor-CU transmits a first transport migration release request for the one or more traffics.
13. The method according to any one of Supplements 1 to 11, wherein in a case where an IAB-MT of an IAB-node performs reestablishment from the first donor-CU to the second donor-CU, and a resource serving for one or more traffics of the IAB-node has been established in the topology of the second donor-CU, the first donor-CU transmits a first transport migration release request for the one or more traffics.
14. The method according to any one of Supplements 1 to 11, wherein in a case where an IAB-MT of an IAB-node establishes dual-connection with the first donor-CU and the second donor-CU, and one or more resources serving for one or more traffics of the IAB-node has been established in the topology of the second donor-CU, the first donor-CU transmits a first transport migration release request for the one or more traffics.
15. A transport migration management method, wherein an IAB-DU of an IAB-node maintains F1 connection with a first donor centralized unit (donor-CU), and a resource serving for a traffic of the IAB-node has been established in a topology of a second donor-CU, and the method includes:
   the second donor-CU receives a first transport migration release request for the traffic transmitted by the first donor-CU; wherein the first transport migration release request is used to request for releasing a resource serving for the traffic in the topology of the second donor-CU.
16. The method according to Supplement 15, wherein the IAB-MT of the IAB-node maintains an RRC connection with the second donor-CU, or the IAB-MT of the IAB-node maintains an RRC connection with the first donor-CU.
17. The method according to Supplement 15 or 16, wherein the traffic includes at least one or a combination of the following: an F1 control plane (F1-C) traffic, an F1 user plane (F1-U) traffic, or a non-F1 traffic.
18. The method according to any one of Supplements 15 to 17, wherein in a case where the traffic is migrated from the topology of the second donor-CU back to the topology of the first donor-CU, or when the traffic ends, the second donor-CU receives a first transport migration release request for the traffic transmitted by the first donor-CU.
19. The method according to any one of Supplements 15 to 18, wherein the second donor-CU receives the first transport migration release request via a first TRANSPORT MIGRATION MANAGEMENT REQUEST message.
20. The method according to any one of Supplements 15 to 19, wherein the first transport migration release request includes a traffic identifier needing to be released.
21. The method according to any one of Supplements 15 to 20, wherein the second donor-CU, after receiving the first transport migration release request, releases BAP sublayer routing and/or a BH RLC channel used by the traffic on a path in the topology of the second donor-CU.
22. A transport migration management method, wherein an IAB-DU of an IAB-node maintains F1 connection with a first donor-CU, and a resource serving for a traffic of the IAB-node has been established in a topology of a second donor-CU, and the method includes:
   the second donor-CU transmits a second transport migration release request for the traffic to the first donor-CU; and
   the second donor-CU releases a resource serving for the traffic in the topology of the second donor-CU.
23. The method according to Supplement 22, wherein the IAB-MT of the IAB-node maintains an RRC connection with the second donor-CU, or the IAB-MT of the IAB-node maintains an RRC connection with the first donor-CU.
24. The method according to Supplement 21 or 22, wherein the traffic includes at least one or a combination of the following: an F1 control plane (F1-C) traffic, an F1 user plane (F1-U) traffic, or a non-F1 traffic.
25. The method according to any one of Supplements 22 to 24, wherein in a case where the traffic is migrated from the topology of the second donor-CU back to the topology of the first donor-CU, the second donor-CU transmits a second transport migration release request for the traffic to the first donor-CU.
26. The method according to any one of Supplements 22 to 25, wherein the second donor-CU transmits the second transport migration release request via a second TRANSPORT MIGRATION MANAGEMENT REQUEST message.
27. The method according to any one of Supplements 22 to 26, wherein the second transport migration release request includes a traffic identifier needing to be released.
28. The method according to any one of Supplements 22 to 27, wherein, the method further includes:
   the second donor-CU receives a transport migration release response transmitted by the first donor-CU.
29. The method according to Supplement 28, wherein the second donor-CU receives the transport migration release response transmitted by the first donor-CU via a TRANSPORT MIGRATION MANAGEMENT RESPONSE message.
30. The method according to Supplement 28 or 29, wherein the transport migration release response includes a traffic identifier that is successfully released.
31. The method according to Supplement 29, wherein the second donor-CU releases a resource serving for the traffic in the topology of the second donor-CU, including:
   the second donor-CU, after receiving the transport migration release response, releases BAP sublayer routing and/or a BH RLC channel used by the traffic on a path in the topology of the second donor-CU.
32. The method according to any one of Supplements 22 to 27, wherein the second donor-CU receives a transport migration release response transmitted by the first donor-CU and used for rejecting a second transport migration release request for the traffic.
33. The method according to Supplement 32, wherein the second donor-CU receives the transport migration release response via a TRANSPORT MIGRATION MANAGEMENT RESPONSE message.
34. The method according to Supplement 32, wherein the transport migration release response includes a traffic identifier of the traffic.
35. The method according to any one of Supplements 22 to 34, wherein in a case where an IAB-MT of an IAB-node is handed over from the first donor-CU to the second donor-CU, and a resource serving for one or more traffics of the IAB-node has been established in the topology of the second donor-CU, the second donor-CU transmits a second transport migration release request for the one or more traffics.
36. The method according to any one of Supplements 22 to 34, wherein in a case where an IAB-MT of an IAB-node performs reestablishment from the first donor-CU to the second donor-CU, and a resource serving for one or more traffics of the IAB-node has been established in the topology of the second donor-CU, the second donor-CU transmits a second transport migration release request for the one or more traffics.
37. The method according to any one of Supplements 22 to 34, wherein in a case where an IAB-MT of an IAB-node establishes dual-connection with the first donor-CU and the second donor-CU, and one or more resources serving for one or more traffics of the IAB-node has been established in the topology of the second donor-CU, the second donor-CU transmits a second transport migration release request for the one or more traffics.
38. A transport migration management method, wherein an IAB-DU of an IAB-node maintains F1 connection with a first donor-CU, and a resource serving for a traffic of the IAB-node has been established in a topology of a second donor-CU, and the method includes:
   the first donor-CU receives a second transport migration release request for the traffic transmitted by the second donor-CU; wherein the second donor-CU releases a resource serving for the traffic in the topology of the second donor-CU.
39. The method according to Supplement 38, wherein the IAB-MT of the IAB-node maintains an RRC connection with the second donor-CU, or the IAB-MT of the IAB-node maintains an RRC connection with the first donor-CU.
40. The method according to Supplement 38 or 39, wherein the traffic includes at least one or a combination of the following: an F1 control plane (F1-C) traffic, an F1 user plane (F1-U) traffic, or a non-F1 traffic.
41. The method according to any one of Supplements 38 to 40, wherein in a case where the traffic is migrated from the topology of the second donor-CU back to the topology of the first donor-CU, the first donor-CU receives a second transport migration release request for the traffic transmitted by the second donor-CU.
42. The method according to any one of Supplements 38 to 41, wherein the first donor-CU receives the second transport migration release request via a second TRANSPORT MIGRATION MANAGEMENT REQUEST message.
43. The method according to any one of Supplements 38 to 42, wherein the second transport migration release request includes a traffic identifier needing to be released.
44. The method according to any one of Supplements 38 to 43, wherein in a case where the traffic is migrated from the topology of the second donor-CU back to the topology of the first donor-CU, the method further includes:
   the first donor-CU configures the IAB-node with uplink BH information that updates the traffic.
45. The method according to any one of Supplements 38 to 44, wherein in a case where the traffic is migrated from the topology of the second donor-CU back to the topology of the first donor-CU, the method further includes:
   the first donor-CU configures the IAB-node to release at least one of the following: header rewriting information of a BAP between the topology of the first donor-CU and the topology of the second donor-CU, routing information in the topology of the second donor-CU, or BH RLC channel mapping information between the topology of the first donor-CU and the topology of the second donor-CU.
46. The method according to any one of Supplements 38 to 45, wherein in a case where the traffic is migrated from the topology of the second donor-CU back to the topology of the first donor-CU, the method further includes:
   the first donor-CU configures the IAB-node to add routing information in the topology of the first donor-CU and/or BH RLC channel mapping information in the topology of the first donor-CU.
47. The method according to any one of Supplements 38 to 46, wherein, the method further includes:
   the first donor-CU configures the IAB-node with an IP address anchored at a donor-DU of the first donor-CU.
48. The method according to any one of Supplements 38 to 47, wherein, the method further includes:
   the first donor-CU configures BAP sublayer routing and/or a backhaul (BH) radio link control (RLC) channel used by the traffic on a path in the topology of the first donor-CU.
49. The method according to any one of Supplements 38 to 48, wherein, the method further includes:
   the first donor-CU transmits a transport migration release response to the second donor-CU.
50. The method according to Supplement 49, wherein the first donor-CU transmits the transport migration release response via a TRANSPORT MIGRATION MANAGEMENT RESPONSE message.
51. The method according to Supplement 49 or 50, wherein the transport migration release response includes a traffic identifier that is successfully released.
52. The method according to any one of Supplements 38 to 48, wherein the first donor-CU rejects a second transport migration release request for the traffic after receiving the second transport migration release request.
53. The method according to Supplement 52, wherein the first donor-CU transmits a transport migration release response used for rejecting a second transport migration release request for the traffic to the second donor-CU.
54. The method according to Supplement 53, wherein the first donor-CU transmits the transport migration release response via a TRANSPORT MIGRATION MANAGEMENT RESPONSE message.
55. The method according to Supplement 53, wherein the transport migration release response includes a traffic identifier of the traffic.
56. An IAB-donor device, including a memory and a processor, the memory storing a computer program, wherein the processor is configured to execute the transport migration management method according to any one of Supplements 1 to 55.

## Claims

1. An integrated access and backhaul (IAB) donor device, wherein an IAB-DU of an IAB-node maintains F1 connection with a first donor centralized unit, and a resource serving for a traffic of the IAB-node has been established in a topology of a second donor centralized unit, and the device comprises:
a transmitting portion configured to transmit a first transport migration release request for the traffic to the second donor centralized unit, wherein the first transport migration release request is used to request for releasing a resource serving for the traffic in the topology of the second donor centralized unit.

2. The device according to claim 1, wherein an IAB-MT of the IAB-node maintains radio resource control connection with the second donor centralized unit, or the IAB-MT of the IAB-node maintains radio resource control connection with the first donor centralized unit.

3. The device according to claim 1, wherein the traffic includes at least one or a combination of the following: an F1 control plane traffic, an F1 user plane traffic, or a non-F1 traffic.

4. The device according to claim 1, wherein in a case where the traffic is migrated from the topology of the second donor centralized unit back to a topology of the first donor centralized unit, or when the traffic ends, the transmitting portion transmits the first transport migration release request for the traffic to the second donor centralized unit.

5. The device according to claim 4, wherein the first transport migration release request is transmitted via a first transport migration management request message.

6. The device according to claim 1, wherein the device further comprises:
a processing portion configured to perform at least one of the following operations:
configuring the IAB-node with updated uplink BH information for the traffic;
configuring the IAB-node to release at least one of the following: header rewriting information of a backhaul adaptation protocol between the topology of the first donor centralized unit and the topology of the second donor centralized unit, routing information in the topology of the second donor centralized unit, or backhaul radio link control channel mapping information between the topology of the first donor centralized unit and the topology of the second donor centralized unit;
configuring the IAB-node to increase routing information in the topology of the first donor centralized unit and/or backhaul radio link control channel mapping information in the topology of the first donor centralized unit;
configuring the IAB-node with an IP address anchored at a donor distributed unit of the first donor centralized unit; or
configuring backhaul adaptation protocol sublayer routing and/or a backhaul radio link control channel used by the traffic on a path in the topology of the first donor centralized unit.

7. The device according to claim 1, wherein the first transport migration release request includes a traffic identifier needing to be released.

8. The device according to claim 1, wherein in a case where the IAB-MT of the IAB-node is handed over from the first donor centralized unit to the second donor centralized unit, and one or more resources serving for one or more traffics of the IAB-node has/have been established in the topology of the second donor centralized unit, the transmitting portion transmits the first transport migration release request for the one or more traffics;
or, in a case where the IAB-MT of the IAB-node performs reestablishment from the first donor centralized unit to the second donor centralized unit, and one or more resources serving for one or more traffics of the IAB-node has/have been established in the topology of the second donor centralized unit, the transmitting portion transmits a first transport migration release request for the one or more traffics;
or, in a case where the IAB-MT of the IAB-node has established dual-connection with the first donor centralized unit and the second donor centralized unit, and one or more resources serving for one or more traffics of the IAB-node has/have been established in the topology of the second donor centralized unit, the transmitting portion transmits a first transport migration release request for the one or more traffics.

9. An integrated access and backhaul (IAB) donor device, wherein an IAB-DU of an IAB-node maintains F1 connection with a first donor centralized unit, and a resource serving for a traffic of the IAB-node has been established in a topology of a second donor centralized unit, and the device comprises:
a transmitting portion configured to transmit a second transport migration release request for the traffic to the first donor centralized unit; and
a processing portion configured to release the resource serving for the traffic in the topology of the second donor centralized unit.

10. The device according to claim 9, wherein in a case of migrating the traffic from the topology of the second donor centralized unit back to the topology of the first donor centralized unit, the transmitting portion transmits a second transport migration release request for the traffic to the first donor centralized unit.

11. The device according to claim 10, wherein the second transport migration release request is transmitted via a second transport migration management request message.

12. The device according to claim 9, wherein the second transport migration release request includes a traffic identifier needing to be released.

13. The device according to claim 9, wherein the device further comprises:
a receiving portion configured to receive a transport migration release response transmitted by the first donor centralized unit.

14. The device according to claim 13, wherein the transport migration release response is received via a transport migration management response message, the transport migration release response including an identifier of a traffic that is successfully released.

15. The device according to claim 9, wherein after receiving the transport migration release response, the processing portion releases backhaul adaptation protocol sublayer routing and/or a backhaul radio link control channel used by the traffic on a path in the topology of the second donor centralized unit.

16. The device according to claim 13, wherein the receiving portion further receives a transport migration release response transmitted by the first donor centralized unit for rejecting the second transport migration release request for the traffic.

17. The device according to claim 16, wherein the transport migration release response is received via a transport migration management response message.

18. The device according to claim 16, wherein the transport migration release response includes a traffic identifier of the traffic.

19. The device according to claim 9, wherein in a case where the IAB-MT of the IAB-node is handed over from the first donor centralized unit to the second donor centralized unit, and one or more resources serving for one or more traffics of the IAB-node has/have been established in the topology of the second donor centralized unit, the transmitting portion transmits a second transport migration release request for the one or more traffics;
or, in a case where the IAB-MT of the IAB-node performs reestablishment from the first donor centralized unit to the second donor centralized unit, and one or more resources serving for one or more traffics of the IAB-node has/have been established in the topology of the second donor centralized unit, the transmitting portion transmits a second transport migration release request for the one or more traffics;
or, in a case where the IAB-MT of the IAB-node has established dual-connection with the first donor centralized unit and the second donor centralized unit, and one or more resources serving for one or more traffics of the IAB-node has/have been established in the topology of the second donor centralized unit, the transmitting portion transmits a second transport migration release request for the one or more traffics.

20. An integrated access and backhaul (IAB) system, comprising a first donor centralized unit and a second donor centralized unit;
the first donor centralized unit transmits a first transport migration release request for a traffic, wherein the first transport migration release request is used to request for releasing a resource serving for the traffic in a topology of the second donor centralized unit; the second donor centralized unit receives the first transport migration release request;
or,
the second donor centralized unit transmits a second transport migration release request for the traffic, and releases the resource serving for the traffic in the topology of the second donor centralized unit; the first donor centralized unit receives the second transport migration release request.
